# EUROPEAN PATENT APPLICATION

(11) **EP 1 779 948 A1**
(43) Date of publication of application: **02.05.2007**
(21) Application number: 05772896.6
(22) Date of filing: 03.08.2005
(51) Int. Cl.: B23B 31/12

(54) **A MANUAL SELF-LOCKING DRILL CHUCK**

(30) Priority: 04.08.2004 CN 200420052897
(71) Applicant: Shandong Weida Machinery Co., Ltd., No. 2 Zhonghan Road Manshan Town - Wendeng Shandong 26400 (CN)
(72) Inventor: YANG, Guimo, Wendeng Shandong 264400 (CN); LI, Yanzhao, Wendeng Shandong 264400 (CN)
(74) Representative: Grebner, Christian Georg Rudolf
(86) International application number: PCT/CN2005/001180
(87) International publication number: WO 2006/012796

(57) **Abstract**

The present invention relates to a manual self-locking drill chuck, which includes a drill body, jaws, a nut, a bearing, a nut sleeve, a front sleeve and a rear sleeve. The three jaws are mounted separately in three inclined holes, which are trisections of said body. The nut constitutes a thread drive together with said jaws. A ratchet is provided between the bearing and the end face of the body. Said ratchet and said body are cooperated with clearance fit. Two elastic locking pawls, which press always on the ratchet, and two elastic projections, which are cooperated with the arched slots in the inner of the front nut, are provided on the rear of the nut sleeve. A locking ring is mounted on the upper of the ratchet. A plurality of down-curved elastic pressing pawls are provided on the ring. The inner hole of the ring and the ratchet are fitted with close clearance, and the outer of the pressing pawls cooperate with the lined slots in the inner of the front sleeve. The chuck has a self-locking function. It will not be loosened due to the vibration or impact. The chuck, which has the advantages of logical structure, convenient employment and steady operation, is suitable for clamping of various drill tools.

## Description

The present application claims priority on Patent Application No. 200420052897.4 filed in China on August 4, 2004, which is herein incorporated by reference.

### TECHNICAL FIELD

The present invention relates to a drill chuck device, more particularly, to a manual self-locking drill chuck.

### BACKGROUND ART

A conventional manual drill chuck comprises a drill body, jaws, a nut, a nut sleeve, a bearing, a front sleeve and a rear sleeve. The three jaws are respectively mounted in three inclined holes, which are equally spaced in the drill body. The nut is fitted in a nut groove of the chuck body. The nut and the threads on the jaws together form a thread driving mechanism to drive the jaws back and forth. The nut sleeve is fixedly connected to the nut. The front sleeve is connected to the nut or the nut sleeve via keys. The rear sleeve is fixedly connected to the drill body. The rear end portion of the drill body has a threaded hole and a cone hole. During installing and using the drill chuck device, the screw of the driving shaft of a driving device is connected with the threaded hole in the rear portion of the drill body. When rotating, the driving shaft drives the drill body leading the three jaws and the held tool therein rotating synchronically. When clamping the tool, one grasps and rotates the front sleeve and the rear sleeve in opposite directions, which results in that the nut connected with the front sleeve via keys to rotates relative to the jaws in the drill body. And the thread transmission between the nut and jaws drives the jaws moving forward along the inclined holes in the drill body to clamp the handle of the tool. Using the exiting drill chuck, the tool for drilling will be easily loosened due to vibration or impact, which affects the work efficiency and reduces the security. Or it is difficult to enable large quantities of production because of the over complex structure of the drill chuck having the self-locking mechanism.

### SUMMARY OF THE INVENTION

An object of the present invention is to provide a manual self-locking drill chuck having a reasonable structure, self-locking function, high work efficiency, security and operation facility, which overcomes the drawbacks of the prior drill chucks.

To achieve the above-mentioned objects of the present invention, the present invention provides a manual self-locking drill chuck, which comprises a drill body, jaws, a nut, a bearing, a nut sleeve, a front sleeve and a rear sleeve, wherein three jaws are respectively installed in three inclined holes equally which are equally spaced in the drill body, the nut is fitted in a nut groove of the drill body, the nut and the jaws together form a thread driving mechanism, the nut sleeve is fixedly connect to the nut, the front sleeve is connected to the nut sleeve via key, characterized in that a ratchet is provided between the bearing and a end face of the drill body, the ratchet is in clearance fit with the drill body; two elastic locking pawls pressing always on the ratchet and two elastic projections cooperated with the arched slots in the inner side of the front sleeve are provided on the rear end of the nut sleeve; a locking ring is mounted on the exterior of the upper end of the ratchet; a plurality of down-curved elastic pressing' pawls are mounted on the locking ring; the inner hole of the locking ring and the outer circle of the ratchet are fitted with close clearance; and the outer side of the elastic pressing pawls cooperate with the lined slots in the inner side of the front sleeve.

In the present invention, lined slots for positioning the elastic pressing pawls and arched slots cooperating with the elastic projections are provided in the inner side of the front sleeve. Driving keys fitted with close clearance with driving slots are provided in the inner side of a front end of the front sleeve. The drill chuck is characterized in that the ratchet has ratchet teeth in the outer side thereof, the included angle of the ratchet teeth with respect to radial direction on the clockwise direction is big, and that in anticlockwise direction is small.

In the present invention, rotating the front sleeve can lead the nut sleeve and the nut rotating, the locking ring rotating with the front sleeve, and the ratchet, driven by elastic locking pawls of the nut sleeve, rotating with the nut sleeve and the nut. While locking, the force of friction between the end face of the ratchet and the drill body is formed because of the axial pressure of the nut. Once the force of friction gets to a certain degree, the ratchet stops rotating. Because the force of friction on the bearing 7 is small, the front sleeve may drive the nut sleeve 5, the locking ring 9 and so on to continuously rotate through a certain angle. When the tool is being clamped, one rotates the front sleeve 6 leading the elastic projections 5-2 of the nut sleeve 5 disengaging from a pair of arched slots 6-3 in the inner side of the front sleeve and reaching the other pair of arched slots 6-2'. At this time, a side of the driving slot 5-3 of the nut sleeve 5 clings to a side of the driving key 6-3 in the inner side of the front end of the front sleeve 6. The nut sleeve 5 and the front sleeve 6 may be reliably coupled. Herein, the elastic pressing pawls 9-1 of the locking ring 9 press on the nut sleeve 5 and enclasp the outer circumference of the elastic locking pawls 5-1 of the ratchet 8 so as to more reliably press themselves into tooth slots of the ratchet 8. With the moment gradually increases, the elastic locking pawls 5-1enclasping the ratchet 8 may slide to the next wheel slot along the side of small gradient of the ratchet teeth of the ratchet 8, however, on the contrary direction, the side of the big gradient effectively prevents the locking pawls from disengaging, realize the locking and anti-loose functions and achieve the object of self-locking.

The present invention may realize the self-locking function on account of adopting the above-mentioned structure, which is facilitated in operation and use, possesses the advantages of reasonable structure, high working stability, operation facility and reliable self-locking capability, and is adapted for the chucks of a variety of drill tools.

### BRIEF DESCRIPTION OF THE DRAWINGS

A further description of the present invention will be given as follows in conjunction with accompanying drawings wherein:
- Fig. 1: is a structural schematic view of the present invention.
- Fig. 2: is a structural schematic view of the nut sleeve of the present invention.
- Fig. 3: is a top view of Fig. 2.
- Fig. 4: is a structural schematic view of a front sleeve.
- Fig. 5: is a top view of Fig. 4.
- Fig. 6: is a structural schematic view of a locking ring.
- Fig. 7: is a right view of Fig. 6.

The reference numbers in the Figures are interpreted as follows: a drill body 1, a rear sleeve 2, a nut 3, a jaw 4, a nut sleeve 5, a locking pawl 5-1, a elastic projection 5-2, a driving slot 5-3, a front sleeve 6, a lined slot 6-1, an arched slot 6-2, an arched slot 6-2', a driving key 6-3, a bearing 7, a ratchet 8, a locking ring 9, a elastic pressing pawl 9-1.

### DESCRIPTION OF PREFERRED EMBODIMENTS

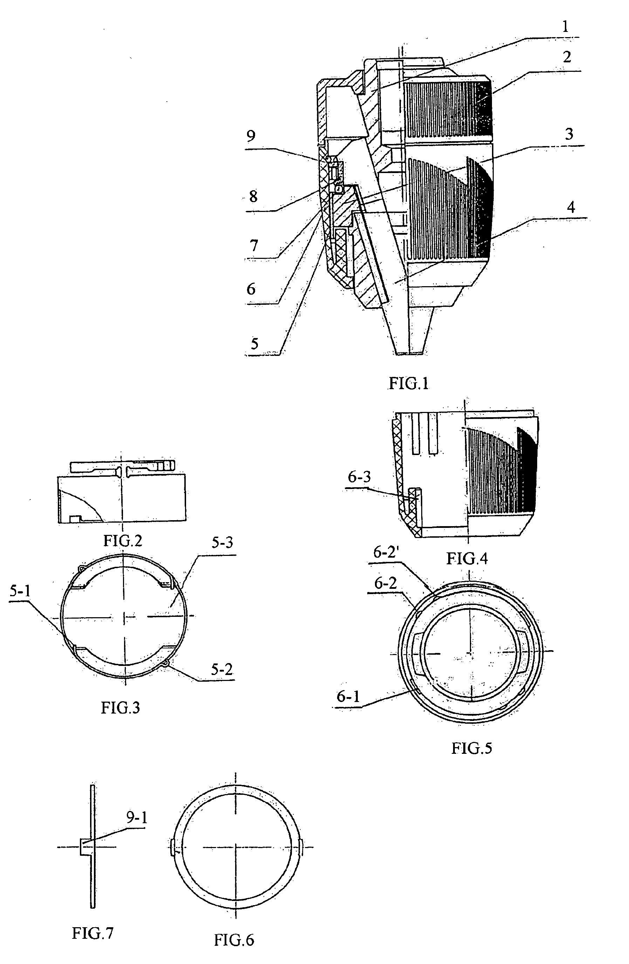

As shown in Fig. 1, a manual self-locking drill chuck according to the present invention comprises a drill body 1, a rear sleeve 2, a nut 3, jaws 4, a nut sleeve 5, a front sleeve 6, and a bearing 7. Three jaws 4 are respectively mounted in three inclined holes that are equally spaced of the body 1. The nut 3 is fitted in a nut groove of the drill body 1. The nut 3 and the threads on the jaws 4 together form a thread driving mechanism. The nut sleeve 5 is fixedly connected with the nut 3. The front sleeve 6 is connected to the nut sleeve 5 via key. The rear sleeve 2 is fixedly connected with the drill body 1. The rear end portion of the drill body has a threaded hole and a cone hole. The above-mentioned structure and the relationship with associated components belong to prior art, so the description in detail is omitted herein.

The present invention is characterized as follows. A ratchet 8 is provided between the bearing 7 and the end face of the drill body 1. The ratchet 8 is provided in its outer side with ratchet teeth. The included angle of the ratchet teeth with respect to radial direction on the clockwise direction is big, and that in anticlockwise direction is small. The ratchet 8 and the drill body 1 are in clearance fit. Two elastic locking pawls 5-1, which press always on the ratchet 8, and two elastic projections 5-2, which cooperate with the arched slots in the inner side of the front sleeve, are provided on the rear end of the nut sleeve 5, as shown in Fig.2 and Fig. 3. A locking ring 9 is mounted on the exterior of the upper end of the ratchet 8 and a plurality of down-curved elastic pressing pawls 9-1 are provided on the locking ring 9, as shown in Fig. 6 and Fig. 7. The inner hole of the locking ring 9 and the outer circumference of the ratchet 8 are fitted with close clearance, and the outer side of the elastic pressing pawls 9-1 cooperates with the lined slots 6-1 in the inner side of the front sleeve. And this may be used to press the elastic locking pawls 5-1. The inner side of the front sleeve 6 of the present invention has the positioning lined slots 6-1 for the elastic pressing pawls and the arched slots 6-2, 6-2' cooperating with the elastic projections 5-2. The inner side of the front end of the front sleeve 6 has driving keys 6-3 in clearance fit with the driving slots 5-3 of the nut sleeve, as shown in Fig. 4 and Fig. 5.

When operating the drill chuck according to the present invention, the nut sleeve 5 and the nut 3 may be driven to rotate through rotating the front sleeve 6. The outer side of the elastic pressing pawls 9-1 of the locking ring 9 cooperates with the lined slots 6-1 in the inner side of the front sleeve and rotates together with the front sleeve 6. The ratchet 8, driven by the elastic locking pawls 5-1 of the nut sleeve 5, rotates with the nut sleeve 5 and the nut 3. While locking, the force of friction between the end face of the ratchet 8 and the drill body 1 is formed because of the axial pressure of the nut. Once the force of friction gets to a certain degree, the ratchet stops rotating. Because the force of friction on the bearing 7 is small, the front sleeve may drive the nut sleeve 5, the locking ring 9 and so on to continuously rotate through a certain angle. When the tool is being clamped, one rotates the front sleeve 6 leading the elastic projections 5-2 of the nut sleeve 5 disengaging from a pair of arched slots 6-3 in the inner side of the front sleeve and reaching the other pair of arched slots 6-2'. At this time, a side of the driving slot 5-3 of the nut sleeve 5 clings to a side of the driving key 6-3 in the inner side of the front end of the front sleeve 6. The nut sleeve 5 and the front sleeve 6 may be reliably coupled together. Herein, the elastic pressing pawls 9-1 of the locking ring 9 press on the nut sleeve 5 and enclasp the outer circumference of the elastic locking pawls 5-1 of the ratchet 8 so as to more reliably press themselves into tooth slots of the ratchet 8. With the moment gradually increases, the elastic locking pawls 5-1 enclasping the ratchet 8 may slide to the next wheel slot along the side of small gradient of the ratchet teeth of the ratchet 8, however, on the contrary direction, the side of the big gradient effectively prevents the locking pawls from disengaging, realize the locking and anti-loose functions and achieve the object of self-locking.

The loosening operation of the present invention is now explained as follows. The front sleeve 6 is rotated in the opposite direction. Here, due to being in the locking condition, the front sleeve 6 can only lead the locking ring 9 to rotate, but can not lead the nut sleeve 5 and the nut 3 to rotate. Such that the elastic pressing pawls 9-1 disengage from the elastic locking pawls 5-1 pressing on the nut sleeve 5. The elastic projections 5-2 of the nut sleeve 5 disengage from the pair of arched slots 6-2' in the inner side of the front sleeve, and get to the other pair of arched slots 6-2. The elastic locking pawls 5-1 enclasping the ratchet 8 are not pressed any more. Here, the other side of the driving key 6-3 in the inner side of the front end of the front sleeve 6 clings to the initial side of the driving slots 5-3 of the nut sleeve 5, which can lead the nut sleeve 5, the nut 3 and so on rotating, as a result the tool is unclamped.

The present invention has self-locking capability against the loose tendency of tool due to vibration or impact, provides the advantages of reasonable structure, performance stability, convenience of operation, reliability of self-locking, and so on, and is adapted for clamping of various of drilling tools.

## Claims

1. A manual self-locking drill chuck comprising a drill body, jaws, a nut, a bearing, a nut sleeve, a front sleeve and a rear sleeve, wherein three jaws are respectively installed in three inclined holes equally which are equally spaced in the drill body, the nut is fitted in a nut groove of the drill body, the nut and the jaws together form a thread driving mechanism, the nut sleeve is fixedly connect to the nut, the front sleeve is connected to the nut sleeve via key, **characterized in that** a ratchet is provided between the bearing and a end face of the drill body, the ratchet is in clearance fit with the drill body; two elastic locking pawls pressing always on the ratchet and two elastic projections cooperated with the arched slots in the inner side of the front sleeve are provided on the rear end of the nut sleeve; a locking ring is mounted on the exterior of the upper end of the ratchet; a plurality of down-curved elastic pressing pawls are mounted on the locking ring; the inner hole of the locking ring and the outer circle of the ratchet are fitted with close clearance; and the outer side of the elastic pressing pawls cooperate with the lined slots in the inner side of the front sleeve.

2. The manual self-locking drill chuck according to Claim 1, **characterized in that** lined slots for positioning the elastic pressing pawls and arched slots cooperating with the elastic projections are provided in the inner side of the front sleeve.

3. The manual self-locking drill chuck according to Claim 1, **characterized in that** driving keys fitted with close clearance with driving slots are provided in the inner side of a front end of the front sleeve.

4. The manual self-locking drill chuck according to Claim 1, **characterized in that** the ratchet has ratchet teeth in the outer side thereof, the included angle of the ratchet teeth with respect to radial direction on the clockwise direction is big, and that in anticlockwise direction is small.
